# EUROPÄISCHE PATENTSCHRIFT

(11) **EP 2 219 159 B1**
(45) Veröffentlichungstag und Bekanntmachung des Hinweises auf die Patenterteilung: **26.06.2013**
(21) Anmeldenummer: 09180514.3
(22) Anmeldetag: 23.12.2009
(51) Int. Cl.: G07F 7/06, G01B 11/24, B07C 5/34, B07C 5/12

(54) **Bilderfassungsvorrichtung und Verwendung derselben in einem Leergut-Rücknahmeautomaten**
Imaging device and utilisation of the same in a device for automatically collecting empties
Dispositif d'enregistrement d'images et son utilisation dans un dispositif de reprise automatique de récipients vides

(30) Priorität: 13.02.2009 DE 102009000834
(43) Veröffentlichungstag der Anmeldung: 18.08.2010
(73) Patentinhaber: SIELAFF GMBH & CO. KG AUTOMATENBAU, 91567 Herrieden (DE)
(72) Erfinder: Kempe, Heiko, 98704 Langewiesen (DE); Oschlies, Manuel, 16727 Velten (DE)
(74) Vertreter: Isarpatent

(56) Entgegenhaltungen:
- DE-A1- 19 512 133
- DE-A1-102008 007 260
- US-A1- 2007 296 956

## Beschreibung

Die vorliegende Erfindung betrifft eine Bilderfassungsvorrichtung zur optischen Erfassung von Gegenständen, welche sich insbesondere zum Einsatz in Rücknahmeautomaten für Leergut eignet. Die Erfindung betrifft ferner eine Verwendung der entsprechenden Bilderfassungsvorrichtung.

In Rücknahmeautomaten, beispielsweise für mit Pfand belegtes Leergut, wie Dosen oder Flaschen, ist eine Identifizierung des in einen entsprechenden Rücknahmeautomaten eingeführten Gebindes zuverlässig notwendig, denn anhand der erkannten Art des Gebindes bzw. Leergutes wird so der auszuzahlende oder gutzuschreibende Pfand bestimmt.

In der Vergangenheit wurde dazu eine fotographische Aufnahme des eingeführten Leergutes aufgenommen und die Form des Leergutes mittels weiterer elektronischer Bild- und Datenverarbeitung durch Vergleich mit bekannten Formen von Leergut identifiziert. Ein besonderes Problem stellt dabei die Durchführung einer zuverlässigen und aufwandsgünstigen Bilderfassung in einem entsprechenden Automaten bei nur schwacher Beleuchtung dar. Zudem ist es gewünscht, die zur optischen Erfassung notwendigen Einrichtungen möglichst platzsparend vorzusehen.

Aus der US 2007/ 02969561 ist eine Bilderfassungsvorrichtung, mit einer Lichtquelle, einer Kamera und einem Reflektor bekannt geworden, die angeordnet sind, um die Form eines Gegenstandes zu erfassen. Aus der DE 10 2008 007 620 A1 ist eine Vorrichtung zur Identifizierung von Leergut bekannt geworden. Die Vorrichtung umfasst dabei eine Lichtquelle, eine optische Einheit zur Ablenkung und Reflektion des Lichts, eine Kamera sowie eine Verarbeitungseinheit zur Verarbeitung von Bildinformationen

In der deutschen Patentanmeldung DE 195 12 133 A1 wurde beispielsweise vorgeschlagen, mittels einer Lichtquelle und einer Fresnel-Linse erzeugte parallele Lichtstrahlen auf einen zu erkennenden Behälter zu strahlen, der vor einem Retroreflektor angeordnet ist. Über einen halbtransparenten Umlenkspiegel wird das von dem Retroreflektor reflektierte Licht in eine Kamera gelenkt deren Signale weiterverarbeitet werden. Ein Nachteil dieser Anordnung besteht insbesondere in der aufwändigen großen Fresnel-Linse, welche mindestens einen Durchmesser aufweisen muss, der den Querschnitt eines zu erkennenden Leergutes überragt. Gemäß der DE 195 12 133 A1 ist außerdem eine parallele Einstrahlung von Licht auf das Leergut notwendig, um einen ausreichenden Kontrast zur Erstellung von Konturabbildungen zu erzielen. Neben der teuren Herstellung der Fresnel-Linsen sind diese ferner wie auch zusätzlich vorgesehene Spiegel schmutzempfindlich und erfordern eine regelmäßige Reinigung.

Es ist daher eine Aufgabe der vorliegenden Erfindung, eine verbesserte Bilderfassungsvorrichtung zur optischen Erfassung von Gegenständen bereitzustellen.

Diese Aufgabe wird durch eine Bilderfassungsvorrichtung mit den Merkmalen des Patentanspruchs 1 gelöst.

Demgemäß weist eine Bilderfassungsvorrichtung zur optischen Erfassung eines Gegenstandes, wie zum Beispiel für einen Rücknahmeautomaten, in den Leergut eingeführt wird, eine punktförmige Lichtquelle, einen Umlenkspiegel für von der Lichtquelle abgestrahlte nichtparallele Lichtstrahlen, einen Retroreflektor und eine Bilderfassungseinrichtung auf. Die Bilderfassungseinrichtung erfasst mittels der von dem Retroreflektor reflektierten Lichtstrahlen zumindest einen Umriss des Gegenstandes. Der Umlenkspiegel ist dabei derart geformt, dass die Lichtstrahlen entlang zumindest einer Kurve auf dem Retroreflektor im Wesentlichen parallel einfallen.

Durch die geringe Anzahl von optischen Elementen wie der Lichtquelle, Retroreflektor, Umlenkspiegel und der Bilderfassungseinrichtung ist die erfindungsgemäße Bilderfassungsvorrichtung einerseits kostengünstig realisierbar und andererseits wartungsarm, da nur wenige Elemente gereinigt werden müssen. Erfindungsgemäß wird eine einfache Punktlichtquelle verwendet.

Die besondere Form des Umlenkspiegels erlaubt eine sehr platzsparende Bauart und Implementierung in einem Rücknahmeautomaten, da einerseits der Strahlengang gefaltet ist und andererseits der Umlenkspiegel eine gute parallele Ausleuchtung auf den Retroreflektor schafft. Durch die Form des Spiegels ist es möglich, Verzerrungen in der Darstellung durch nichtparallelen Lichteinfall auf den Gegenstand und den Retroreflektor zu kompensieren. Insgesamt ist daher eine verbesserte Gegenstandserfassung möglich.

Der Retroreflektor reflektiert einfallende Lichtstrahlen im Wesentlichen in die entgegengesetzte Richtung der Einfallsrichtung, sodass von dem jeweiligen Gegenstand gestreutes oder gebrochenes Licht nicht auf die Bilderfassungseinrichtung fällt und nur dunkler wahrnehmbar ist. Dabei ist die Lichtquelle vorzugsweise im Wesentlichen an demselben Ort der Bilderfassungseinrichtung vorgesehen. Auf die Bilderfassungseinrichtung fallen somit lediglich Lichtstrahlen, die an dem zu erkennenden Gegenstand vorbei auf den Retroreflektor treffen. Selbst bei transparenten Gegenständen müssten von der Lichtquelle ausgesandte Lichtstrahlen den Gegenstand zweimal passieren, um die Bilderfassungseinrichtung zu erreichen. Dabei erfolgt eine genügend hohe Intensitätsabschwächung des Lichtes, sodass ein hoher Kontrast zwischen derartig gestreuten oder gebrochenen Lichtstrahlen und den direkt von dem Retroreflektor in die Bilderfassungseinrichtung reflektierten Lichtstrahlen erzielt wird. Dies führt zu kontrastreichen Aufnahmen in der Bilderfassungseinrichtung, wodurch Umrisse oder Konturen von zu erfassenden Gegenständen erkannt werden können. Somit kann der jeweilige Gegenstand sicher identifiziert werden.

Der zu untersuchende Gegenstand, wie z. B. ein Gebinde oder Leergut, ist in einem Strahlengang zwischen der Lichtquelle, dem Umlenkspiegel, dem Retroreflektor und der Bilderfassungseinrichtung vorgesehen. Erfindungsgemäß befindet sich der Gegenstand in einem Erfassungsbereich, der zwischen dem Umlenkspiegel und dem Retroreflektor liegt.

Der Umlenkspiegel in dem Strahlengang kann beispielsweise zylindrisch ausgeführt werden, wobei bei entsprechender Krümmung die Lichtstrahlen auf einer geraden Linie auf den Retroreflektor einfallen. Es ist auch möglich, generell den Spiegel konkav zu gestalten oder auch sphärische oder parabolische Querschnitte für den Umlenkspiegel vorzusehen. Bei einem vollständig parabolischen Spiegel kann die Lichtquelle in einem der Brennpunkte angeordnet werden, sodass nur parallele Lichtstrahlen entstehen.

Eine Transporteinrichtung zum Transportieren des jeweiligen Gegenstandes in einen Erfassungsbereich befindet sich zwischen dem Umlenkspiegel und dem Retroreflektor. Die Lichtstrahlen fallen dann senkrecht zu der Transportrichtung und zueinander parallel ein.

In einer Ausführungsform weist die Bilderfassungseinrichtung, die beispielsweise als CCD oder Videokamera ausgeführt ist, ein Objektiv mit einer Öffnung auf, wobei die Lichtquelle derart angeordnet ist, dass die Lichtquelle teilweise diese Öffnung bedeckt. Die Aufnahmequalität der erfassten Umrisse oder Bilder wird dadurch nicht beeinträchtigt. Allerdings lassen sich so die Bilderfassungseinrichtung und die punktförmige Lichtquelle praktisch an demselben Ort anordnen.

Zusätzlich oder alternativ lassen sich auch mehrere Lichtquellen z. B. ringförmig um die Bilderfassungseinrichtung herum anordnen.

Die Lichtquelle weist beispielsweise eine Leuchtdiode auf. Der Retroreflektor kann auch eine Retroreflektorfolie umfassen.

Die Erfindung betrifft ferner die Verwendung einer erfindungsgemäßen Bilderfassungsvorrichtung in einem Rücknahmeautomat für Gegenstände. Dabei können die Gegenstände zum Beispiel als Leergut, insbesondere als Getränkeverpackungen, Dosen, Behälter und/oder Flaschen, ausgebildet sein. Die Erfindung eignet sich sowohl für Einweggebinde, zum Beispiel Einwegflaschen, als auch für Mehrweggebinde, zum Beispiel Mehrwegflaschen.

Weitere Ausgestaltungen der Erfindung sind Gegenstand der Unteransprüche sowie der im Folgenden beschriebenen Ausführungsbeispiele. Die Erfindung ist durch die beigefügten Patentansprüche definiert. Im Weiteren wird die Erfindung anhand von Ausführungsbeispielen unter Bezugnahme auf die beigelegten Figuren näher erläutert. Es zeigt dabei:
- Figur 1: ein erstes Ausführungsbeispiel einer Bilderfassungsvorrichtung;
- Figur 2: mögliche Anordnungen von Lichtquellen und Bilderfassungseinrichtungen; und
- Figur 3: Querschnitts- und Draufsichtsansichten eines zweiten Ausführungsbeispiels in einem Rücknahmeautomat.

In den Figuren sind, sofern nichts Anderes angegeben ist, gleiche bzw. funktionsgleiche Elemente mit denselben Bezugszeichen versehen worden.

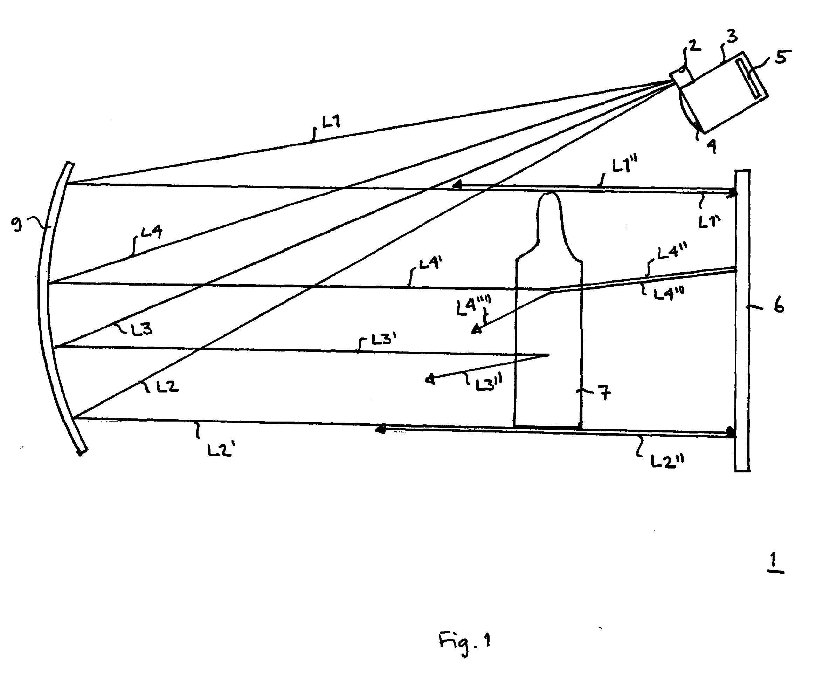

Die Figur 1 zeigt schematisch eine Bilderfassungsvorrichtung 1. Die Bilderfassungsvorrichtung 1 umfasst dabei entlang eines möglichen Strahlenganges durch dieselbe eine Lichtquelle 2, einen zum Beispiel parabolischen oder auch sphärischen Umlenkspiegel 9, einen Retroreflektor 6 und eine Bilderfassungseinrichtung 3, welche das von dem Retroreflektor 6 und dem Umlenkspiegel 9 reflektierte Licht registriert.

Die im Wesentlichen punktförmige Lichtquelle 2 strahlt, wie hier beispielhaft durch Pfeile angedeutet, nichtparallele Lichtstrahlen L1, L2, L3, L4 ab. Als Lichtquelle kommen beispielsweise Leuchtdioden, Glühlämpchen, elektronische Blitze oder weitere beliebige im Wesentlichen punktförmige Lichtquellen in Frage. Dabei ist die Verwendung von sichtbarem Licht wie auch ultraviolettem oder Infrarotlicht denkbar. Bei einem Einsatz als Beleuchtungssystem in Pfandrücknahmeautomaten können durch Wahl der Lichtfarbe auch ästhetische Empfindungen des adressierten Kunden oder des Betreibers berücksichtigt werden.

Eine Bilderfassungseinrichtung 3, die schematisch als CCD-Kamera mit einem Objektiv 4 und einem lichtempfindlichen CCD-Chip 5 dargestellt ist, ist praktisch an demselben Ort wie die punktförmige Lichtquelle 2 angeordnet. Eine denkbare Ausführungsform der CCD-Kamera weist z. B. einen CCD-Chip 5 mit 600 x 800 Pixeln auf, der eine Fläche von etwa 10 mm² ausfüllt. Das Objektiv weist dann beispielsweise eine Öffnung von 2,5 cm auf und hat eine longitudinale Ausdehnung von etwa 3 cm. Eine Brennweite von 6,5 mm ist üblich. Allerdings sind auch höher auflösende digitale Kameras möglich.

Die nichtparallelen Lichtstrahlen L1-L4 treffen auf einen konkaven Umlenkspiegel 9. Durch die Form der Spiegeloberfläche werden die reflektierten Lichtstrahlen in parallele Lichtstrahlen L1'-L4' in Richtung zu dem Retroreflektor 6 geworfen. Der Retroreflektor 6 ist im Strahlengang hinter einem zu erfassenden Gegenstand 7 angeordnet.

Der Retroreflektor 6 wirft eintreffende Lichtstrahlen oder andere Wellen in dieselbe Richtung zurück, aus der sie auf ihn einstrahlen. Dies ist zum Beispiel in der Figur 1 anhand der Lichtstrahlen L1' und L1", L2' und L2" bzw. L4' und L4" zu erkennen. Retroreflektoren 6 sind beispielsweise als Folien erhältlich oder auch als Katzenaugen bekannt. Beispielsweise wirkt ein Tripel-Spiegel mit einer rechtwinkligen Anordnung von drei reflektierenden Oberflächen als Retroreflektor. Eine rasterförmige Anordnung vieler solcher Triple-Spiegel führt dann zu einem flächigen Retroreflektor, wie er bei der beschriebenen Bilderfassungsvorrichtung 1 eingesetzt wird. Prinzipbedingt tritt meist ein kleiner seitlicher Versatz bei der Retroreflektion auf.

Ein von der punktförmigen Lichtquelle 2 ausgesendeter Lichtstrahl L1, der über den Umlenkspiegel 9 als Lichtstrahl L1' auf einen idealen Retroreflektor 6 trifft würde genau auf die Lichtquelle 2 zurückreflektiert. Sowohl eine gewisse Toleranz der Retroreflektion wie auch der erwähnte seitliche Versatz ermöglicht jedoch, dass das zurückreflektierte Licht L1" im Wesentlichen auf die Öffnung des Objektivs 4 der Bilderfassungseinrichtung 3 fällt. Lichtstrahlen L1', L2', die an dem zu erkennenden Gegenstand 7 vorbei auf den Retroreflektor 6 treffen, erzeugen als reflektierte Strahlen L1", L2" nach Rückreflektion mittels des Umlenkspiegels 9 Bilder zur weiteren Auswertung in der CCD-Kamera 3.

Von der Lichtquelle 2 erzeugte und von dem Umlenkspiegel 9 umgeleitete Lichtstrahlen L3', L4', die auf den Gegenstand 7 treffen, werden von diesem gestreut bzw. reflektiert L3"', oder wenn der Gegenstand 7 eine gewisse Transparenz aufweist, gebrochen L4". An dem Gegenstand gebrochene Lichtstrahlen L4" treffen dann auf den Retroreflektor 6 und werden wieder in Richtung auf den Gegenstand 7 reflektiert L4"' und wiederum gestreut oder gebrochen L4"'. Die von dem Gegenstand 7, der beispielsweise ein Leergutgebinde wie Dosen, Flaschen oder sonstige rücknahmefähige Behälter darstellt, gebrochenen oder reflektierten Lichtstrahlen L3", L4"" erreichen das Objektiv 4 der CCD-Kamera 3 nicht.

Auf dem CCD-Chip 5 wird somit ein Umriss oder eine Kontur des Gegenstandes 7 mit hohem Kontrast abgebildet. Selbst ein den Gegenstand 7 durchlaufender Lichtstrahl und von dem Retroreflektor 6 durch den Gegenstand 7 fallender Lichtstrahl schwächt sich beim zweimaligen Durchlaufen durch den Gegenstand 7 derart stark ab, dass dennoch ein besonders hoher Kontrast besteht.
Anstelle eines üblichen Planspiegels zur Faltung des Strahlengangs wird eine Spiegelform verwendet, die möglichst parallele Lichtstrahlen L1'-L4' aus dem Strahlenbündel L1-L4 liefert. Dadurch kann eine geringere Verzerrung der bildgebenden Strahlen erzielt werden, und eine besonders kompakte Bauform der Erfassungsvorrichtung 1 wird möglich.

Die Bilderfassungsvorrichtung 1 hat ferner den Vorteil, dass keine wartungsaufwändigen weiteren Linsenkonstruktionen oder halbdurchlässige Spiegel notwendig sind. Die Bilderfassungsvorrichtung 1 lässt sich mit einer günstigen einfachen punktförmigen Lichtquelle 2 betreiben, welche beispielsweise als eine oder mehrere LEDs erhältlich ist. Aufwändige Linsen für die Bereitstellung von parallelen Strahlen sind nicht notwendig.

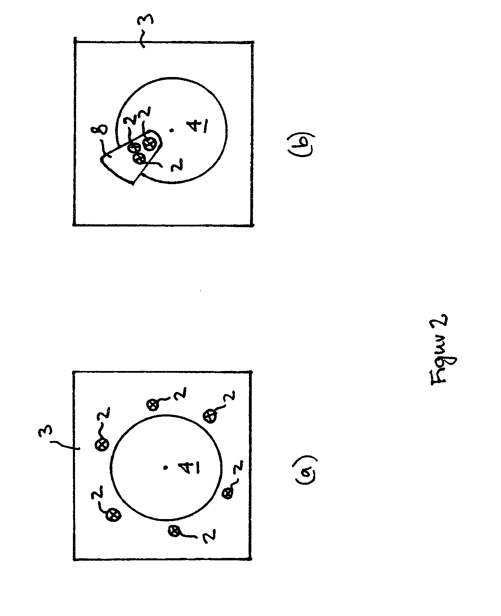

In der Figur 2 sind mögliche Anordnungen der punktförmigen Lichtquellen bezüglich der Bilderfassungseinrichtung dargestellt. In der Figur 2 ist jeweils eine CCD-Kamera 3 mit einer Frontlinse bzw. einem Objektiv 4, das eine Öffnung aufweist, dargestellt.

Gemäß dem Ausführungsbeispiel der Figur 2A sind sechs Leuchtdioden 2 ringförmig um die Objektivöffnung 4 angeordnet.

In der Figur 2B ist eine Möglichkeit zur Anordnung der punktförmigen Lichtquellen 2, beispielsweise als LEDs dargestellt. Es ist ein geeigneter Halter 8 vorgesehen, der z. B. drei LEDs 2 trägt, wobei der Halter 8 in die Querschnittsfläche des Objektivs 4 hineinragt. Obwohl ein Teil der Öffnung des Objektivs 4 durch den Halter und die darauf angeordneten LEDs 2 abgedeckt ist, wirkt sich dies praktisch nicht auf die Abbildungsleistung des Objektivs 4 und damit der Kamera 3 aus. Der Halter 8 kann zudem derart angeordnet werden, dass in der Regel der zu untersuchende Gegenstand 7 im Strahlengang der Bilderfassungsvorrichtung derart angeordnet vorliegt, dass ein Bild im Wesentlichen durch den nicht-abgedeckten Teil der Objektivöffnung erfolgt. Der Halter kann dabei z. B. zwischen dem Objektiv und dem Gegenstand angebracht werden. Denkbar ist auch eine Anordnung in dem Objektiv selbst.

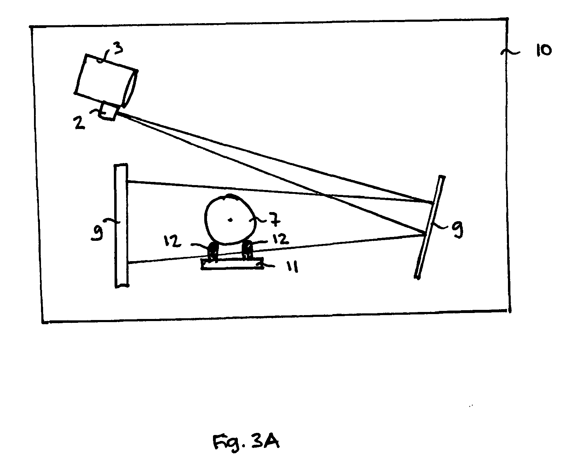

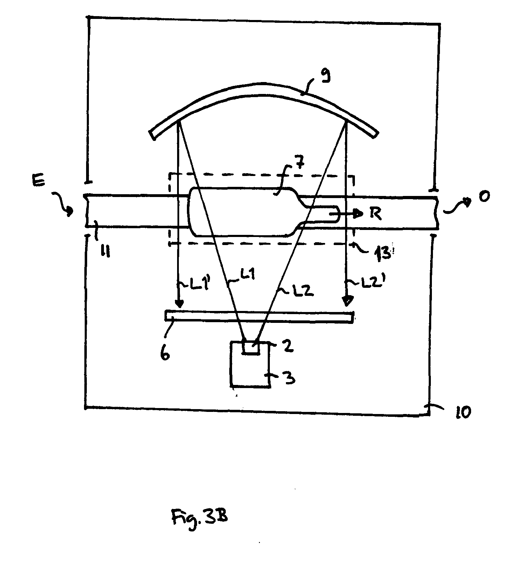

Die Figur 3 zeigt ein Ausführungsbeispiel für einen Rücknahmeautomaten 10 mit einer Bilderfassungsvorrichtung.

Es sind dabei zum Teil dieselben Elemente wie in der Figur 1 in Bezug auf die Bilderfassungsvorrichtung 1 dargestellt, auf die nicht näher eingegangen wird. Figur 3A zeigt eine schematische Querschnittsansicht und Figur 3B eine Draufsicht eines Rücknahmeautomaten 10.

Ein Gegenstand 7, wie zum Beispiel eine Pfandflasche, kann über eine Eingangsöffnung E in den Rücknahmeautomaten 10 eingeführt werden. Ein Transportband 11 mit geeigneten Halterungen oder Transportschienen 13 befördert die eingelegte Flasche 7 entlang einer Transportrichtung R zu einem Erfassungsbereich 13, um den herum die Erfassungsvorrichtung, wie sie bereits hinsichtlich der Figur 1 näher erläutert wurde, angeordnet ist. Nach der Erfassung und Klassifizierung des Gegenstandes 7 kann die entsprechende Transporteinrichtung 11, 12 den Gegenstand 7 entweder durch eine Austrittsöffnung O zur weiteren Verarbeitung, wie zum Beispiel Sammlung, Verdichtung etc. weiterleiten, oder aber die Annahme wird verweigert, und der Gegenstand 7 wird wieder durch die Eintrittsöffnung E ausgeworfen.

Der Umlenkspiegel 9 ist in dem dargestellten Beispiel konkav ausgebildet. Dadurch wirkt der Umlenkspiegel 9 in der Querschnittsansicht der Figur 3A wie ein Planspiegel, was anhand der konischen Lichtkegel illustriert ist. Allerdings ist der Umlenkspiegel 9, wie es in der Draufsicht der Figur 3B erkennbar ist, derart gekrümmt, dass in dem Erfassungsbereich 13, wo der Gegenstand 7 vorliegt, die Lichtstrahlen L1', L2' senkrecht zu der Transportrichtung R verlaufen. Das bedeutet, dass die Strahlen L1' und L2' zumindest auf einer geraden Linie auf dem Retroreflektor 6 parallel einfallen. Der Abstand zwischen dem Umlenkspiegel 9 und dem Retroreflektor 6 bzw. der darüber angeordneten Kombination aus Lichtquelle 2 und Kamera 3 ist daher sehr gering, weil die von der Lichtquelle 2 ausgesandten Strahlen L1, L2 deutlich nichtparallel verlaufen können. Der Umlenkspiegel 9 entzerrt oder kompensiert dies durch seine Form. Auch entlang der Transportrichtung R ist wegen der Spiegelform eine kompakte, besonders kurze Bauform möglich.

Die beschriebene Bilderfassungsvorrichtung wird vorzugsweise in einem Rücknahmeautomaten für Gebinde eingesetzt, wobei die platzsparend erzeugte kontrastreiche Konturabbildung bzw. der Umriss der zu erkennenden Gegenstände oder Gebinde einer weiteren Bild- und Datenverarbeitung zugeführt werden kann. Durch Vergleich mit bekannten Umriss- bzw. Konturdaten von Gebinden, wie Leergut, wird dann eine Entscheidung beispielsweise über das auszuzahlende Pfand getroffen.

Obwohl die vorliegende Erfindung anhand bevorzugter Ausführungsbeispiele näher erläutert wurde, ist sie nicht darauf beschränkt, sondern vielfältig modifizierbar. Insbesondere sind die in der Beschreibung angegebenen Maße und Beispielsformen des Umlenkspiegels oder Angaben zu der Objektivgröße, Abstände oder Daten der Bilderfassungseinrichtung variabel.

**Bezugszeichenliste**

| | |
|---|---|
| 1 | Bilderfassungsvorrichtung |
| 2 | punktförmige Lichtquelle |
| 3 | Bilderfassungseinrichtung |
| 4 | Objektiv |
| 5 | CCD-Chip |
| 6 | Retroreflektor |
| 7 | Gegenstand |
| 8 | Halter |
| 9 | Umlenkspiegel |
| 10 | Rücknahmeautomat |
| 11 | Transportband |
| 12 | Transportschiene |
| 13 | Erfassungsbereich |
| | |
| E | Eingang |
| O | Ausgang |
| R | Transportrichtung |
| L1 - L4, | Lichtstrahlen |
| L1' - L4', L4'', L4''' | gestreute, gebrochene oder reflektierte Lichtstrahlen |

## Patentansprüche

1. Bilderfassungsvorrichtung (1) zur optischen Erfassung eines Gegenstandes (7) zum Einsatz in Rücknahmeautomaten für Leergut,
mit einer punktförmigen Lichtquelle (2), die nichtparallele Lichtstrahlen (L1-L4) abstrahlt,
mit einem Umlenkspiegel (9) für die von der Lichtquelle (2) abgestrahlten nichtparallelen Lichtstrahlen (L1-L4), wobei der Umlenkspiegel (9) in dem Strahlengang zwischen der Lichtquelle (2) und dem Gegenstand (7) angeordnet ist,
mit einem Retroreflektor (6) und mit einer Bilderfassungsein-richtung (3), welche die vom Retroreflektor (6) und dem Umlenkspiegel zurückreflektierten Lichtstrahlen (L1", L2") registriert und zumindest einen Umriss des Gegenstandes (7) erfasst,
mit einer Transporteinrichtung (11, 12), die zum Transportieren des Gegenstandes (7) in einer Transportrichtung (R) in einen Erfassungsbereich (13) zwischen dem Umlenkspiegel (9) und dem Retroreflektor (6) angeordnet ist,
wobei der Umlenkspiegel (9) zylindrisch, konkav oder sphärisch derart geformt und angeordnet ist, dass die Lichtstrahlen (L1', L2', L3', L4'), zueinander parallel in dem Erfassungsbereich (13) senkrecht zu der Transportrichtung (R) einfallen und entlang zumindest einer Kurve auf dem Retroreflektor (6) im Wesentlichen parallel einfallen.

2. Bilderfassungsvorrichtung (1) nach Anspruch 1, wobei die Lichtquelle (2) im Wesentlichen derart an demselben Ort der Bilderfassungseinrichtung (3) angeordnet ist, dass das vom Retroreflektor (6) und dem Umlenkspiegel (9) reflektierte Licht in die Bilderfassungseinrichtung (3) fällt.

3. Bilderfassungsvorrichtung (1) nach einem der Ansprüche 1 - 2 wobei die Bilderfassungseinrichtung (3) mindestens eine CCD- oder Videokamera aufweist.

4. Bilderfassungsvorrichtung (1) nach einem der Ansprüche 1 - 3, wobei die Lichtquelle (2) mindestens eine Leuchtdiode aufweist.

5. Bilderfassungsvorrichtung (1) nach einem der Ansprüche 1 - 4, wobei der Retroreflektor (6) eine Retroreflektorfolie aufweist.

6. Rücknahmeautomat (10) zur Rücknahme von Gegenständen, dermit einer Bilderfassungsvorrichtung nach einem der Ansprüche 1 - 5 ausgestattet ist.

7. Rücknahmeautomat nach Anspruch 6, wobei der Rücknahmeautomat zur Rücknahme von als Leergut, insbesondere Getränkeverpackungen, Dosen, Behälter und/oder Flaschen, ausgebildeten Gegenständen (7) ausgebildet ist.

## Claims

1. Image capture device (1) for optically detecting an item (7), for use in reverse vending machines for empty containers,
comprising a point light source (2), which emits non-parallel light rays (L1-L4),
comprising a deflection mirror (9) for the non-parallel light rays (L1-L4) emitted by the light source (2), the deflection mirror (9) being arranged in the ray path between the light source (2) and the item (9),
comprising a retro-reflector (6) and comprising an image capture means (3), which records the light rays (L1", L2") reflected back from the retro-reflector (6) and the deflection mirror and detects at least one outline of the item (7),
comprising a transport means (11, 12), which is arranged for transporting the item (7) in a transport direction (R) into a detection region (13) between the deflection mirror (9) and the retro-reflector (6),
wherein the deflection mirror (9) is cylindrically, concavely or spherically shaped and arranged in such a way that the light rays (L1', L2', L3', L4') are incident mutually parallel in the detection region (13), perpendicular to the transport direction (R), and are incident substantially parallel along at least one curve on the retro-reflector (6).

2. Image capture device (1) according to claim 1, wherein the light source (2) is arranged substantially at the same position as the image capture means (3), in such a way that the light reflected by the retro-reflector (6) and the deflection mirror (9) is incident on the image capture means (3).

3. Image capture device (1) according to either claim 1 or claim 2, wherein the image capture means (3) comprises at least one CCD camera or video camera.

4. Image capture device (1) according to any one of claims 1 to 3, wherein the light source (2) comprises at least one LED.

5. Image capture device (1) according to any one of claims 1 to 4, wherein the retro-reflector (6) comprises a retroreflective foil.

6. Reverse vending machine (10) for redeeming items, which is equipped with an image capture device according to any one of claims 1 to 5.

7. Reverse vending machine according to claim 6, wherein the reverse vending machine is formed for redeeming items (7) in the form of empty containers, / in particular drink packages, cans, containers and/or bottles.

## Revendications

1. Dispositif d'acquisition d'images (1) destiné à l'acquisition optique d'un objet (7) à utiliser dans des machines de récupération de bouteilles consignées,
comportant une source lumineuse punctiforme (2) qui émet des rayons lumineux (L1-L4) non parallèles,
comportant un miroir de déviation (9) pour les rayons lumineux (L1-L4) non parallèles émis par la source lumineuse (2), le miroir de déviation (9) étant disposé dans le faisceau optique entre la source lumineuse (2) et l'objet (7),
comportant un rétroréflecteur (6) et un système d'acquisition d'images (3) qui enregistre les rayons lumineux (L1" , L2") réfléchis par le rétroréflecteur (6) et le miroir de déviation et saisit au moins un contour de l'objet (7),
comportant un système de transport (11, 12) disposé dans une zone d'acquisition (13) entre le miroir de déviation (9) et le rétroréflecteur (6) pour transporter l'objet (7) dans une direction de transport (R),
dans lequel le miroir de déviation (9) a une forme cylindrique, concave ou sphérique et est disposé de telle sorte que les rayons lumineux (L1', L2', L3', L4') entrent parallèlement les uns aux autres dans la zone d'acquisition (13) de manière perpendiculaire à la direction de transport (R) et entrent sensiblement parallèlement sur le rétroréflecteur (6) le long d'au moins une courbe.

2. Dispositif d'acquisition d'images (1) selon la revendication 1, dans lequel la source lumineuse (2) est disposée sensiblement sur le même emplacement que le système d'acquisition d'images (3) de telle sorte que la lumière réfléchie par le rétroréflecteur (6) et le miroir de déviation (9) entre dans le système d'acquisition d'images (3).

3. Dispositif d'acquisition d'images (1) selon l'une des revendications 1 à 2, dans lequel le système d'acquisition d'images (3) présente au moins une caméra CCD ou vidéo.

4. Dispositif d'acquisition d'images (1) selon l'une des revendications 1 à 3, dans lequel la source lumineuse (2) présente au moins une diode électroluminescente.

5. Dispositif d'acquisition d'images (1) selon l'une des revendications 1 à 4, dans lequel le rétroréflecteur (6) présente une feuille rétro-réfléchissante.

6. Machine de récupération (10) destinée à récupérer des objets et équipée d'un dispositif d'acquisition d'images selon l'une des revendications 1 à 5.

7. Machine de récupération selon la revendication 6, dans laquelle la machine de récupération est configurée pour récupérer des bouteilles conseillées, en particulier des objets (7) formant des emballages de boissons, des canettes, des contenants et/ou des bouteilles.
